(19) Europäisches Patentamt

European Patent Office

Office européen des brevets

(11) **EP 4 224 011 A1**

(12) **EUROPEAN PATENT APPLICATION**

(43) Date of publication:
**09.08.2023 Bulletin 2023/32**

(21) Application number: **22382088.7**

(22) Date of filing: **02.02.2022**

(51) International Patent Classification (IPC):
**F03D 7/02** (2006.01)    **F03D 17/00** (2016.01)

(52) Cooperative Patent Classification (CPC):
**F03D 17/00; F03D 7/0224; F03D 7/0288;
F03D 7/0292**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
Innovation &
Technology S.L.
31621 Sarriguren (Navarra) (ES)**

(72) Inventor: **The designation of the inventor has not
yet been filed**

(74) Representative: **SGRE-Association
Siemens Gamesa Renewable
Energy GmbH & Co KG
Schlierseestraße 28
81539 München (DE)**

(54) **METHOD AND DEVICE OF CONTROLLING A WIND TURBINE BY INDIVIDUAL PITCH CONTROL**

(57)      It is described a method and a device of controlling a wind turbine (1). The method comprising at least one of the following determining steps: determining upper and lower envelopes (E1, E2) of a blade out-of-plane bending moment; determining upper and lower envelopes of a shaft tilt and yaw bending moment (Mi); determining upper and lower envelopes of a tower top tilt and yaw bending moment; determining a blade tip-tower distance (63). The method comprising individually controlling a pitch angle of each blade (6) so that the envelopes of the determined variables and/or the blade tip-tower distance (63) are controlled to be below or above certain predetermined threshold values.

FIG 1

**Description**

Field of invention

The present invention relates to a method and a device of controlling a wind turbine by individual pitch control.

Extreme design loads on a wind turbine typically come from extreme gusts or extreme turbulence load cases. It is desired to detect/estimate these loads, by which the wind turbine is experiencing utmost load/deflections, and to mitigate them as far as possible. Typically, an individual pitch control is used based on blade strain sensors. Loads are typically based on direct measurements of the component deformation by means of such strain sensors. Blade strain sensors are difficult to install, calibrate or replace when they fail. Therefore, the use of alternative sensors/technology to estimate loads in a wind turbine and/or to feed and individual pitch strategy represents a great advantage.

Summary of the Invention

There may be a need for a method and a device of method of controlling a wind turbine, where the different loads can be mitigated in an easier and inexpensive manner. This need may be met by the subject matters according to the independent claims. The present invention is further developed as set forth in the dependent claims.

According to the invention, a method and a device of controlling a wind turbine are provided. The wind turbine comprises a tower, a nacelle being mounted rotatable about a yaw axis to the tower, a hub being mounted to a shaft in the nacelle, the shaft being rotatable about a rotation axis, and a plurality of blades being mounted to the hub. The method comprises at least one of the following steps of determining upper and lower envelopes of a blade out-of-plane bending moment; determining upper and lower envelopes of a shaft tilt and yaw bending moment; determining upper and lower envelopes of a tower top tilt and yaw bending moment; and determining a blade tip-tower distance. The method comprises a step of individually controlling a pitch angle of each blade so that the determined envelopes of the above-mentioned variables and/or the blade tip-tower distance are controlled to be below or above certain predetermined threshold values.

In an embodiment, an individual pitch actuation is calculated by means of an optimization algorithm that ensures a minimum possible pitch actuation to keep the envelopes below/above the certain predefined thresholds values at the same time. In an embodiment, only a subset of the load envelopes is used.

In an embodiment, the out-of-plane bending moment is a bending moment which acts on a section perpendicular to the length axis of the blade and is calculated by adding a mean component and an oscillatory component, wherein the mean moment is obtained from a model of the wind turbine exposed to and interacting with the wind inflow, and the oscillatory component is obtained from the shaft tilt bending moment and or the shaft yaw bending moment; superposing the oscillatory bending moment component on the mean bending moment component to obtain an upper envelope and a lower envelope of a blade root out-of-plane bending moment; the model of the wind turbine exposed to and interacting with the wind inflow includes a model of one or more blades representing its structural geometrical mass and aerodynamic properties and has at least one parameter as a time-dependent input, which is selected from a group comprising a hub rotational speed, a blade azimuth angle, a wind speed, a blade pitch angle, a blade pitch rate, a yaw angle, a yaw rate, a yaw acceleration, an air density, a nacelle acceleration, a nacelle angular velocity, a nacelle inclination, a nacelle displacement and a generator torque.

In an embodiment, the envelopes of the tilt and yaw bending moment are determined by filtering signals of the tilt and yaw bending moment time series.

In an embodiment, the load envelopes at a prediction timestep in future relative to the actual time are determined for the case of no pitch activation and lead to a phasing out of individual pitch activation if falling below a threshold.

Advantageously, the blade out-of-plane bending moment envelope, the tip-tower distance, the shaft tilt and yaw bending moments, and the tower top bending moments can be controlled all at the same time. At each time step, the envelopes of the previous signals are calculated. If the envelope of one or several signals is higher than its own threshold then the individual pitch control (IPC) components cosinus and sinus pitch angles are calculated in order to reduce all loads below their thresholds, i.e., the amplitudes in the IPC are calculated as $P_c \cos$ (azimuth)+$P_s \sin$ (azimuth).

This individual pitch control is able to get the desired load reduction for the aforementioned loads sensors at the same time by applying the minimum possible pitch amplitude according to a combination of weighted goodness criteria. When individual pitch control actuation will not be enough to get the desired load reductions, a collective pitch actuation can be added to the individual one to reach the desired load levels.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1    shows a wind turbine and the different elements thereof;

Fig. 2    shows the effect of an out-of-plane bending moment envelope according to an embodiment;

Fig. 3    shows upper and lower envelopes of the out-of-plane bending moment according to an embodiment;

Fig. 4    shows an example of basic definitions of tilt and yaw moments in an overview of coordinate systems;

Fig. 5    shows an example of rotorplane and out-of-plane-moment definitions;

Fig. 6    shows an example of rotorplane and out-of-plane-moment definitions;

Fig. 7    shoes an example of a concept of calculating up-per and lower envelopes;

Fig. 8    shows a flowchart of an example of superposing in total eight allpass operations; and

Fig. 9    shows an example of upper and lower envelopes.

Detailed Description

The illustrations in the drawings are schematically. It is noted that in different figures, similar or identical elements are provided with the same reference signs.

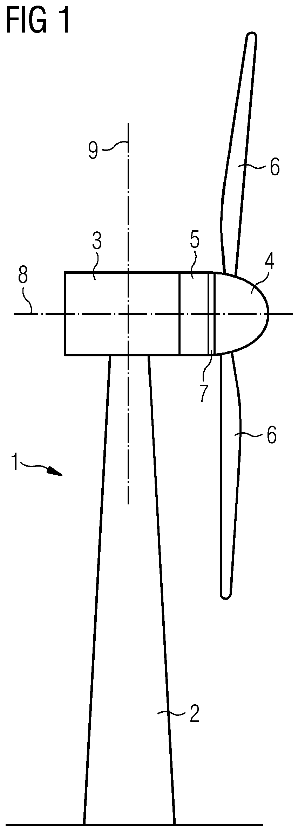

Fig. 1 shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as a yaw axis 9.
The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.
The wind turbine 1 furthermore comprises a generator 5. The generator 5 in turn comprises a rotor connecting the generator 5 with the hub 4. If the hub 4 is connected directly to the generator 5, the wind turbine 1 is referred to as a gear-less, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1.
The generator 5 is accommodated within the nacelle 3. The generator 5 is arranged and prepared for converting the rotational energy from the hub 4 into electrical energy in the shape of an AC power.

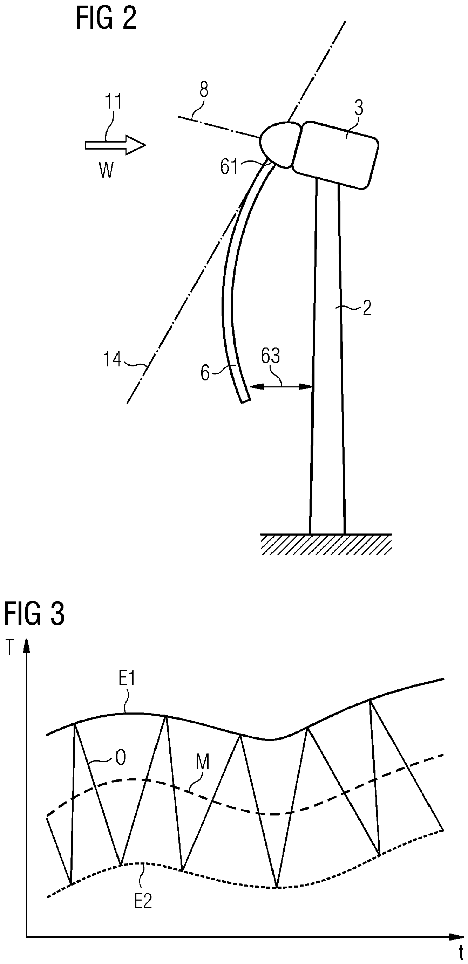

**Fig. 2** shows the effect of an out-of-plane bending moment envelope according to an embodiment. The out-of-plane bending moment is a bending moment which acts on a section 61 perpendicular to the length axis of the blade 6. Reference sign 14 designates a blade plane in which the non-deformed blades 6 rotate. The minimum distance between a tip of the blade 6 (blade-tip), even when the blade 6 is deformed, and the tower 2 must be greater than a prescribed minimum at all times during rotor rotation in order for the wind turbine 1 to be certified for operation. This minimum distance is referred to herein as the tip-tower distance 63. The tip-tower distance 63 can be calculated based on the information of the blade out-of-plane bending moment envelope, the shaft tilt and yaw bending moment (Mi) and the tower top tilt and yaw bending moment.
**Fig. 3** shows upper and lower envelopes E1, E2 of the out-of-plane bending moment according to an embodiment. The envelopes of the shaft tilt and yaw bending moment, and of the tower top tilt and yaw bending moment are similar.
The method method of controlling a wind turbine 1 comprises at least one of the following determining steps: determining upper and lower envelopes of a blade out-of-plane bending moment; determining upper and lower envelopes of the shaft tilt and yaw bending moment Mi; determining upper and lower envelopes of a tower top tilt and yaw bending moment; and determining the blade tip-tower distance 63 (in an embodiment, the blade tip-tower distance 63 can be derived by a moment-in-front-of tower outside a predefined sector in front of the tower 2). The shaft tilt and yaw bending moments are bending moments of the shaft 10 about the y-axis and the z-axis, respectively. The tower top tilt and yaw bending moments are bending moments at a top of the tower 2 about the y-axis and the z-axis, respectively.

The method further comprises a step of individually controlling a pitch angle of each blade 6 so that the determined envelopes of the above-mentioned variables and/or the determined blade tip-tower distance 63 are controlled to be below or above certain predetermined threshold values. The pitch angle is an actuated orientation of the blade 6 about a longitudinal axis of the corresponding blade 6.

An individual pitch actuation, individually for each blade 6, can be calculated by means of an optimization algorithm that ensures a minimum possible pitch actuation to keep the envelopes below/above the certain predefined thresholds values at the same time.

The out-of-plane bending moment can be a bending moment which acts on a section 61 perpendicular to the length axis of the blade 6 as shown in Fig. 2, and it can be calculated by adding a mean component M and an oscillatory component O as shown in Fig. 2, wherein the mean moment M is obtained from a model of the wind turbine 1 exposed to and interacting with the wind inflow W, and the oscillatory component O is obtained from the shaft tilt bending moment and or the shaft yaw bending moment. The method further comprises steps of superposing the oscillatory bending moment component O on the mean bending moment component M to obtain an upper envelope E1 and a lower envelope E2 of a blade root out-of-plane bending moment as shown in Fig. 3. The model of the wind turbine 1 exposed to and interacting with the wind inflow W can include a model of one or more blades 6 representing its structural geometrical mass and aerodynamic properties and has at least one parameter as a time-dependent input, which is selected from a group comprising a hub rotational speed, a blade azimuth angle, a wind speed, a blade pitch angle, a blade pitch rate, a yaw angle, a yaw rate, a yaw acceleration, an air density, a nacelle acceleration, a nacelle angular velocity, a nacelle inclination, a nacelle displacement and a generator torque.

The envelopes of the tilt and yaw bending moment Mi can be determined by filtering signals of the tilt and yaw bending moment time series Mi.

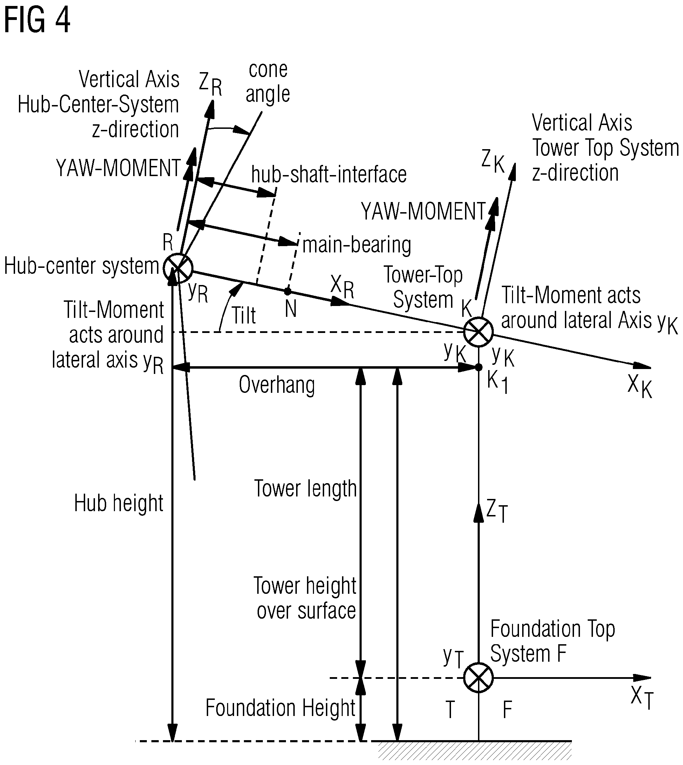

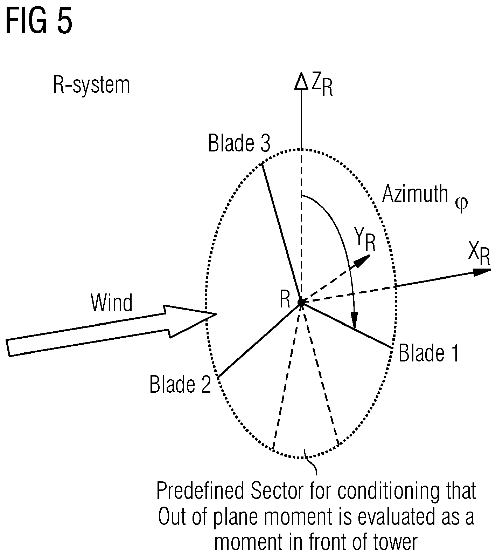

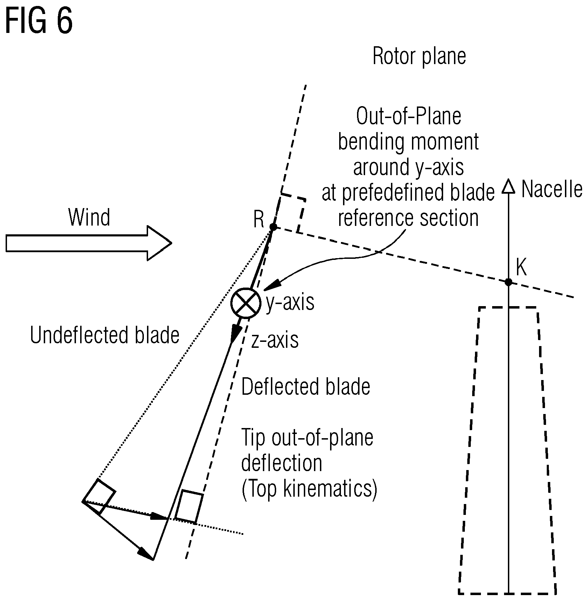

**Fig. 4** shows an example of basic definitions of tilt and yaw moments, including tower top tilt and yaw bending moments, in an overview of coordinate systems, and **Figures 5 and 6** show an example of rotorplane and out-of-plane-moment (OOP) definitions.

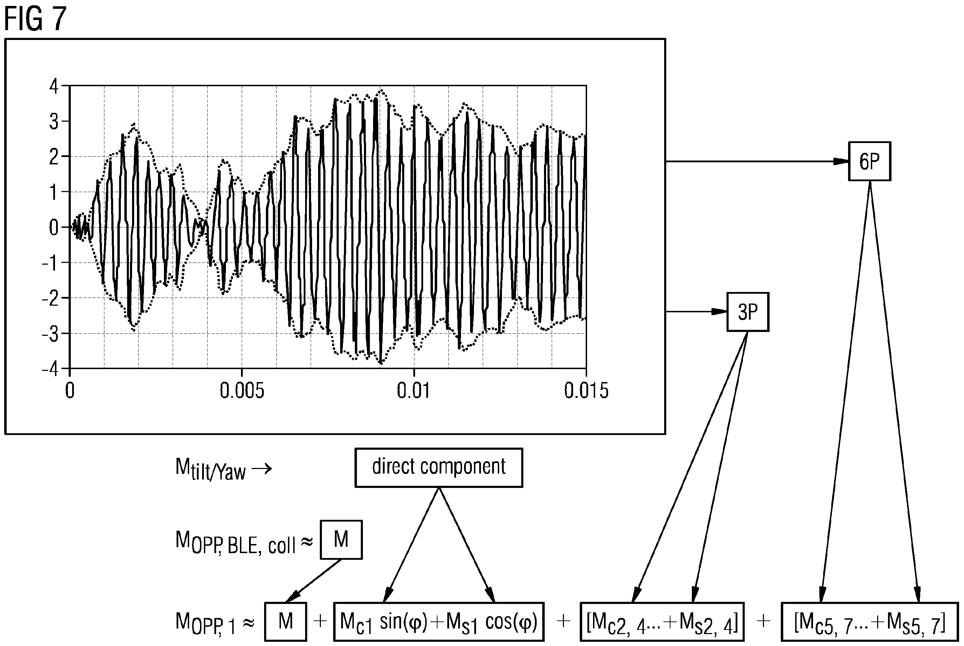

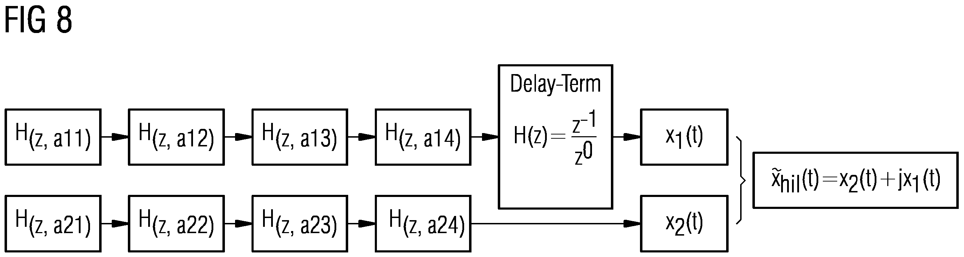

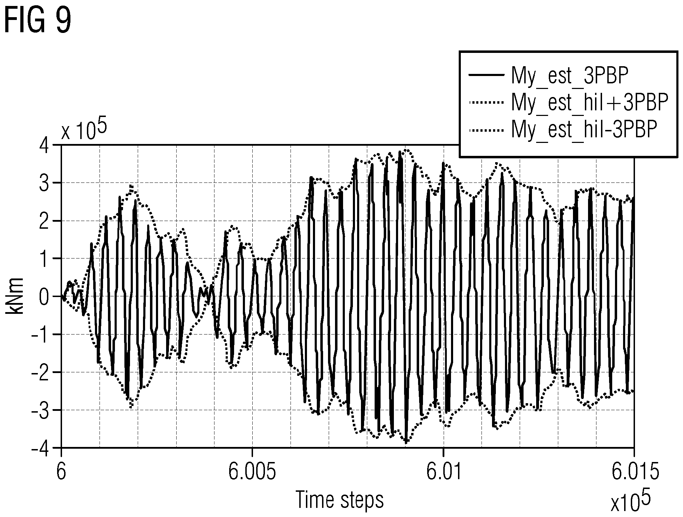

**Fig. 7** shows an example of a concept of calculating upper and lower envelopes, **Fig. 8** shows a flowchart of an example of superposing in total eight allpass operations, and **Fig. 9** shows an example of upper and lower envelopes.

A blade individual out-of-plane moment OOP (for three blades 6 mounted by a distance of 120° at the hub 4) by a Fourier series of a direct component and sinusoidal components of (multiples) of the periodic sampling frequency in the tilt/yaw bending moment can be expressed as follows:

$$OOP1(\varphi) \approx M + Mc1\cos(\varphi) + Ms1\sin(\varphi) + Mc2\cos(2\varphi) + Ms2\sin(2\varphi) + Ms3\sin(3\varphi) + Mc3\cos(3\varphi) + Ms4\sin(4\varphi)$$
$$+ Mc4\cos(4\varphi) + \text{Higher order terms}$$

$$OOP2(\varphi) \approx M + Mc1\cos\left(\varphi + \frac{2\pi}{3}\right) + Ms1\sin\left(\varphi + \frac{2\pi}{3}\right) + Mc2\cos\left(2\varphi + \frac{2\pi}{3}\right) + Ms2\sin\left(2\varphi + \frac{2\pi}{3}\right) + Ms3\sin\left(3\varphi + \frac{2\pi}{3}\right) + Mc3\cos\left(3\varphi + \frac{2\pi}{3}\right)$$
$$+ Ms4\sin\left(4\varphi + \frac{2\pi}{3}\right) + Mc4\cos\left(4\varphi + \frac{2\pi}{3}\right) + \text{Higher Order Terms}$$

$$OOP3(\varphi) \approx M + Mc1\cos\left(\varphi + \frac{4\pi}{3}\right) + Ms1\sin\left(\varphi + \frac{4\pi}{3}\right) + Mc2\cos\left(2\varphi + \frac{4\pi}{3}\right) + Ms2\sin\left(2\varphi + \frac{4\pi}{3}\right) + Ms3\sin\left(3\varphi + \frac{4\pi}{3}\right) + Mc3\cos\left(3\varphi + \frac{4\pi}{3}\right)$$
$$+ Ms4\sin\left(4\varphi + \frac{4\pi}{3}\right) + Mc4\cos\left(4\varphi + \frac{4\pi}{3}\right) + \text{Higher Order Terms}$$

$$\begin{bmatrix} M_{tilt} - M_{tilt\_grav} \\ M_{yaw} \end{bmatrix} \approx \begin{bmatrix} \cos(\varphi) & \cos(\varphi + \frac{2\pi}{3}) & \cos(\varphi + \frac{4\pi}{3}) \\ \sin(\varphi) & \sin(\varphi + \frac{2\pi}{3}) & \sin(\varphi + \frac{4\pi}{3}) \end{bmatrix} \begin{bmatrix} OOP1(\varphi) \\ OOP2(\varphi) \\ OOP3(\varphi) \end{bmatrix}$$

$$\approx \begin{bmatrix} \underbrace{\frac{3\,Mc1}{2}}_{} + \underbrace{Ms2\,\frac{3\sin(3\varphi)}{2} + Ms4\,\frac{3\sin(3\varphi)}{2} + Mc2\,\frac{3\cos(3\varphi)}{2} + Mc4\,\frac{3\cos(3\varphi)}{2}}_{} \\ \underbrace{\frac{3\,Ms1}{2}}_{} + \underbrace{Mc2\,\frac{3\sin(3\varphi)}{2} - Mc4\,\frac{3\sin(3\varphi)}{2} + Ms4\,\frac{3\cos(3\varphi)}{2} - Ms2\,\frac{3\cos(3\varphi)}{2}}_{} \end{bmatrix}$$

2x1 terms related to 1P.    2 x 4 terms related to the 3P component

The 3P components Ms3, Mc3 of the OOP-blade bending moment do not have a representation in the tilt/yaw-bending moment, and Mtilt_grav is the static gravity component which is only applicable in the tilt-direction.

As possible enhancements, 6P and 9P terms can be added into the blade estimator.

As shown in Fig. 3, there is a general signal decomposition of the mean moment M (direct component) and the oscillatory component O (sinusoidal component), and the envelopes E1, E2 (sinusoidal components). In one embodiment, the envelopes mean moments, i.e., the direct components M are approximated by a lowpass-filter.

In the following, an example for creating the envelopes is described. For estimating the sinusoidal component O and its upper and lower envelopes E1, E2, the signal is filtered by a bandpass around the selected frequency (for example (multiples of) the rotorperiodic sampling frequency). The bandpass processing provides signals dominated to a large extent by the center frequency and with a negligible direct component. To evaluate the magnitude of the periodic signal, its instantaneous envelope (dotted line) can be calculated by an approximate solution of the Hilbert-transform of the signal.

An approximation $\tilde{x}_{hit}(t)$ by subsequent allpasses might be one embodiment with low computational effort. A single allpass with a scalar coefficient a is formulated in z-space as

$$H_{(z,a)} = \frac{a^2 - \frac{1}{z^2}}{1 - \frac{a}{z^2}} \tag{1}$$

The superposition of in total eight allpass operations can be compiled in the flowchart of Fig. 8.

It should be noted that the term "comprising" does not exclude other elements or steps and "a" or "an" does not exclude a plurality. Also, elements described in association with different embodiments may be combined. It should also be noted that reference signs in the claims should not be construed as limiting the scope of the claims.

**Claims**

1.    A method of controlling a wind turbine (1), the wind turbine (1) comprising a tower (2), a nacelle (3) being mounted rotatable about a yaw axis (9) to the tower (2), a hub (4) being mounted to a shaft (10) in the nacelle (3), the shaft (10) being rotatable about a rotation axis (8), and a plurality of blades (6) being mounted to the hub (4); the method comprising at least one of the following determining steps:

     determining upper and lower envelopes (E1, E2) of a blade out-of-plane (OOP) bending moment;
     determining upper and lower envelopes of a shaft tilt and yaw bending moment (Mi);
     determining upper and lower envelopes of a tower top tilt and yaw bending moment;
     determining a blade tip-tower distance (63); and
     the method comprising individually controlling a pitch angle of each blade (6) so that the determined envelopes of the variables and/or the blade tip-tower distance (63) are controlled to be below or above certain predetermined threshold values.

2.    The method according to the preceding claim, wherein an individual pitch actuation is calculated by means of an optimization algorithm that ensures a minimum possible pitch actuation to keep the envelopes below/above the certain predefined thresholds values at the same time.

3.    The method according to any one of the preceding claims, wherein only a subset of the envelopes is used.

4. The method according to any one of the preceding claims, wherein the out-of-plane bending moment is a bending moment which acts on a section (61) perpendicular to the length axis of the blade (6) and is calculated by adding a mean component (M) and an oscillatory component (O), wherein the mean moment (M) is obtained from a model of the wind turbine (1) exposed to and interacting with the wind inflow (W), and the oscillatory component (O) is obtained from the shaft tilt bending moment and or the shaft yaw bending moment;

superposing the oscillatory bending moment component (O) on the mean bending moment component (M) to obtain an upper envelope (E1) and a lower envelope (E2) of a blade root out-of-plane bending moment;
the model of the wind turbine (1) exposed to and interacting with the wind inflow (W) includes a model of one or more blades (6) representing its structural geometrical mass and aerodynamic properties and has at least one parameter as a time-dependent input, which is selected from a group comprising a hub rotational speed, a blade azimuth angle, a wind speed, a blade pitch angle, a blade pitch rate, a yaw angle, a yaw rate, a yaw acceleration, an air density, a nacelle acceleration, a nacelle angular velocity, a nacelle inclination, a nacelle displacement and a generator torque.

5. The method according to any one of the preceding claims, wherein
the envelopes of the tilt and yaw bending moment (Mi) are determined by filtering signals of the tilt and yaw bending moment time series (Mi).

6. The method according to any one of the preceding claims, wherein the envelopes at a prediction timestep in future relative to the actual time are determined for the case of no pitch activation and lead to a phasing out of individual pitch activation if falling below a threshold.

7. A device for controlling a wind turbine (1), the wind turbine (1) comprising a tower (2), a nacelle (3) being mounted rotatable about a yaw axis (9) to the tower (2), a hub (4) being mounted to a shaft (10) in the nacelle (3), the shaft (10) being rotatable about a rotation axis (8), and a plurality of blades (6) being mounted to the hub (4); the device comprising at least one of the following determining units:

a first determining unit configured to determine upper and lower envelopes of a blade out-of-plane (OOP) bending moment;
a second determining unit configured to determine upper and lower envelopes of a shaft tilt and yaw bending moment (Mi) ;
a third determining unit configured to determine upper and lower envelopes of a tower top tilt and yaw bending moment;
a fourth determining unit configured to determine a blade tip-tower distance (63); and
the device comprising an individually controlling unit configured to individually control a pitch angle of each blade (6) so that the determined envelopes of the above-mentioned variables and/or the blade tip-tower distance (63) are controlled to be below or above certain predetermined threshold values.

FIG 1

FIG 2

FIG 3

# FIG 4

# FIG 5

R-system

$Z_R$

Blade 3

Azimuth $\varphi$

$Y_R$

$X_R$

Wind

R

Blade 1

Blade 2

Predefined Sector for conditioning that
Out of plane moment is evaluated as a
moment in front of tower

# FIG 6

Rotor plane

Out-of-Plane bending moment around y-axis at prefedefined blade reference section

Nacelle

Wind

R

K

⊗ y-axis

Undeflected blade

z-axis

Deflected blade

Tip out-of-plane deflection (Top kinematics)

## FIG 7

$M_{tilt/Yaw} \rightarrow$

$M_{OPP, BLE, coll} \approx \boxed{M}$

$M_{OPP, 1} \approx \boxed{M} + \boxed{M_{c1} \sin(\varphi) + M_{s1} \cos(\varphi)} + \boxed{[M_{c2, 4} \ldots + M_{s2, 4}]} + \boxed{[M_{c5, 7} \ldots + M_{s5, 7}]}$

direct component

6P

3P

EP 4 224 011 A1

EP 4 224 011 A1

# FIG 8

$H_{(z,\,a11)}$ → $H_{(z,\,a12)}$ → $H_{(z,\,a13)}$ → $H_{(z,\,a14)}$ → Delay-Term $H(z) = \dfrac{z^{-1}}{z^0}$ → $x_1(t)$

$H_{(z,\,a21)}$ → $H_{(z,\,a22)}$ → $H_{(z,\,a23)}$ → $H_{(z,\,a24)}$ → $x_2(t)$

$\tilde{x}_{hil}(t) = x_2(t) + j x_1(t)$

## FIG 9

Europäisches
Patentamt

European
Patent Office

Office européen
des brevets

# EUROPEAN SEARCH REPORT

Application Number

EP 22 38 2088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 892 851 A1 (GENERAL ELECTRIC RENOVABLES ESPANA SL [ES]) 13 October 2021 (2021-10-13) * paragraph [0001] – paragraph [0002] * * paragraph [0013] – paragraph [0018] * * paragraph [0027] * * paragraph [0030]; figure 4 * * paragraph [0031] – paragraph [0032] * * paragraph [0035] – paragraph [0045]; figure 5 * * paragraph [0050] – paragraph [0059] * | 1-7 | INV. F03D7/02 F03D17/00 |
| X | WO 2010/016764 A1 (STICHTING ENERGIE [NL]; VAN ENGELEN TIMOTHEUS GERARDUS [NL]) 11 February 2010 (2010-02-11) * page 2, lines 10-15 * * page 9, line 1 – page 10, line 10; figure 5 * * page 14, line 4 – line 15 * * page 15, line 1 – line 15; claim 15 * | 1-7 | |
| A | EP 3 071 831 A1 (VESTAS WIND SYS AS [DK]) 28 September 2016 (2016-09-28) * paragraph [0031] – paragraph [0039] * * paragraph [0061] – paragraph [0065] * | 1-7 | TECHNICAL FIELDS SEARCHED (IPC) F03D |

The present search report has been drawn up for all claims

| Place of search | Date of completion of the search | Examiner |
|---|---|---|
| The Hague | 12 July 2022 | Tack, Gaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 2088

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2022

| Patent document cited in search report | | Publication date | Patent family member(s) | | Publication date |
|---|---|---|---|---|---|
| EP 3892851 | A1 | 13-10-2021 | CN | 113530757 A | 22-10-2021 |
| | | | EP | 3892851 A1 | 13-10-2021 |
| | | | US | 2021317818 A1 | 14-10-2021 |
| WO 2010016764 | A1 | 11-02-2010 | NL | 2001878 C2 | 09-02-2010 |
| | | | WO | 2010016764 A1 | 11-02-2010 |
| EP 3071831 | A1 | 28-09-2016 | EP | 3071831 A1 | 28-09-2016 |
| | | | ES | 2687784 T3 | 29-10-2018 |
| | | | US | 2016305402 A1 | 20-10-2016 |
| | | | WO | 2015074664 A1 | 28-05-2015 |

EPO FORM P0459